# EUROPEAN PATENT APPLICATION

(11) **EP 4 685 627 A1**
(43) Date of publication of application: **28.01.2026**
(21) Application number: 24190043.0
(22) Date of filing: 22.07.2024
(51) Int. Cl.: G06F 3/14, G09G 3/00

(54) **DISPLAY SYSTEM, DISPLAY METHOD AND NON-TRANSITORY PROCESSOR-READABLE MEDIUM**

(71) Applicant: Optoma Europe Ltd., Hemel Hempstead HP1 2UJ (GB)
(72) Inventor: MacLeod, Scott, Hemel Hempstead, HP1 2UJ (GB)
(74) Representative: Ter Meer Steinmeister & Partner

(57) **Abstract**

In an aspect of the present invention there is provided a display system for displaying at least one object. The display system comprises a display element configured to display the at least one object; at least one sensing device; and a display controller. The at least one sensing device is configured to provide a sensing signal related to a location of a presenter in front of the display element. The display controller is configured to determine a portion of the display element that is visually covered by the presenter based on the sensing signal, and to adjust dis-playing of the at least one object based on the determined portion.

## Description

### Technical Field

The present invention relates to a display system for displaying at least one object, a corresponding display method and a corresponding non-transitory processor -readable medium.

### Technical Background

Display is commonly used for a presentation. In one scenario of presentation, a presenter may want to interact with the information presented by the display. During such events, the presenter may wish to pose and/or walk around in front of the display as part of the presentation.

With moving around in front of the display the presenter provides messages to support the information presented on the display. The presenter may cover objects presented on the display and thereby unintentionally obscuring the covered objects. In other words, the presenter may block views of audiences to see a part of the information presented by the display.

To always keep the various elements or objects of the presentation visible even with the presenter moving in front of the display. Usually, such rearrangements are controlled manually, i.e., by the presenter, a co-presenter or a third person, e.g., based on gesture interaction as mentioned in US 2023 / 0013169 A1. However, on-the-fly manual rearrangements at the desired time are difficult to realize and/or are limited to pre-configured locations for presentation elements that may be manually activated when needed. Having preset configurations limits the flexibility of the presentation and requires a configuration of the presentation beforehand and in line with the presenter's script.

### Summary of the disclosure

Hence, there is a need to provide a display system which is configured to automatically adjust the display content based on the movement of a presenter in front of the display element.

There is a further need to provide a display system which is configured to recognize obstructed vision onto its display element.

Furthermore, a corresponding method for controlling the display system is needed.

At least one of these objectives is solved with the features of the independent claims. Further advantageous embodiments are described in the dependent patent claims.

In an aspect of the present invention, a display system for displaying at least one object is provided. The display system comprises a display element configured to display the at least one object; at least one sensing device; and a display controller. The at least one sensing device is configured to provide a sensing signal related to a location of a presenter in front of the display element. The display controller is configured to determine a portion of the display element that is visually covered by the presenter based on the sensing signal, and to adjust displaying of the at least one object based on the determined portion.

The display element may represent any element, device or unit being configured for displaying an image as display content according to image data provided to the display element. The display element may be a large screen display, e.g., an all-in-one LED display by Optoma having a screen diagonal of 100 inch or more. The display element may comprise multiple display units, tiles or panels combined to form a single large display. Each display unit displays a smaller piece of an overall image. In other words, the large screen display may be formed of a matrix of the multiple display units being arranged in lines and columns, such that the large screen display displays the overall image. In one embodiment, the display element may be a projection screen, onto which the image data provided to a projection device is projected for display.

The display element may comprise an image data receiving unit, which may represent any unit being configured for receiving image data from an external host. In this context, the image data may represent any image data being provided to the display element and/or being received by the display element from at least one device being external to the display element. In one embodiment, the display controller may provide or forward the image data to the display element. In other words, the image data may be any data that is not processed or affected by the display element.

The display controller may be configured for providing control data associated with control signals to the display element or to a projection device. The control data may represent any data for controlling the display element and/or displaying the image data on the display element. In other words, the display controller may control the way the image data is represented by the display element.

The at least one sensing device may represent any element or device being configured for sensing, measuring, or identifying a data related to a location of the presenter, in particular positioning data. In other words, the sensing element may be an element for sensing, measuring or identifying if the presenter is located in front of the display element and/or in which zone the presenter is located in front of the display element and/or in which distance the presenter is located in front of the display element, and/or at which position the presenter is located in front of the display element. The sensing signal may include further information on the presenter itself, such as a height and/or a width of the presenter. The at least one sensing device may be configured to recognize the presenter in front of the display element. The at least one sensing device may generate the sensing signal based on the sensed, measured or identified data, in particular in real-time, and provides the sensing signal to the display controller. The at least one sensing device may be connected physically (by wire) or wirelessly to the display controller. In other words, the sensing signal may be transmitted wired or wireless from the sensing element to the display controller. The sensing signal may represent any data related to a location of the presenter in front of the display element. The at least one sensing device may be mounted to the display element or be separate.

The display controller may determine, based on the sensing signal, which portion of the display element, i.e., the display screen or the projection screen, may be visually covered by the presenter. In one embodiment, the display controller may divide the screen area of the display element into multiple portions and may determine based on the sensing signal which of these portions are visually covered by the presenter. In one embodiment, the portion which is visually covered by the presenter may depend on the viewing angle of the display element.

The at least one object may comprise video images, subtitles or text of the presentation.

The display controller may be set up or programmed with configurations and rules for adjusting the at least one object based on the location of the presenter.

The display controller may be configured to perform a coordinate conversion. The coordinate points of the position of the presenter associated with the sensing signal may be converted to a coordinate system of a display content of the display element. The display content which comprises the at least one object is displayed on the display device. The display controller may be configured to generate location relationships between the position of the presenter and the at least one object.

In one embodiment, the display controller may determine a (virtual) projection of the presenter's shape onto the display element based on the sensing signal. If the at least one object is represented within the projection of the presenter's shape, the display controller may adjust the representation of the at least one object, in particular such that the portion of the display element comprising the projection of the presenter's shape is essentially free of displaying the at least one object. In one embodiment, the portion of the display element comprising the projection of the presenter's shape is essentially free of any representation. The representation of the at least one object is adjusted based on the determined portion. In other words, the at least one object may be displayed in a different manner on the display element such that it remains visible to the audience.

In one embodiment, the at least one sensing device may be set up along with associated software or firmware which configures the at least one sensing device to determine the location of the presenter and send the determined location to the display controller. Alternatively, or in addition, the display controller may be configured to determine the location of the presenter based on the sensing signal received from the at least one sensing device.

In one embodiment, the at least one sensing device may detect and/or track the location or position of the presenter in different dimensions, i.e., in terms of the width of the display element and/or in terms of distance from the display element. In addition, the at least one sensing device may detect or track a vertical position or extent of the presenter, e.g., in terms of the height of the display element.

In this context, the term "visually covered" may represent that an observer in the audience may not see the at least one object as it is obstructed by the presenter in front of the display element. The at least one object remains displayed, however, the presenter has moved into the line of sight between an observer and the portion of the display element, in which the at least one object is represented. In one embodiment, the presenter may visually cover the at least one object only for a fraction of the audience, i.e., a first observer viewing the display element under a first viewing angle may not see the portion of the display element containing the representation of the at least one object, whereas a second observer viewing the display element under a second viewing angle may see the respective portion of the display element. In this embodiment, the portion may be determined based on a predefined viewing angle or range thereof.

According to the invention, the presenter is able to control the display of the at least one object by changing his/her position and the display may be able to react to the presenter's position according to preconfigured settings and rules. This means that less configurational effort may be required during the presentation. The predefined rules may furthermore allow for more flexibility during a presentation, since a predefined script or sequence may be varied online. Consequently, presentations may appear smoother and more synchronized for the audience. The invention allows for flexible, reactive display sequencing and transitions and reduces the upfront effort to configure transitions and sequencing. The display system can automatically adjust the displayed at least one object so the presenter does not block images, text or other media.

In one embodiment of the display system, the display controller may be configured to adjust displaying of the at least one object such that the at least one object is at least partially excluded from the determined portion.

The term "excluded" herein means that the at least one object is not displayed any more within the determined portion.

In one embodiment of the display system, adjusting to display of the at least one object may include at least one of resizing, moving, enabling, disabling the at least one object. Further types of transition/adjustment of the at least one object may be controlled by the position of the presenter based on preconfigured arrangements and standard rules, examples may include, but are not limited to, appearing, disappearing, fading, swapping position, scaling, audio/video pause and playback, alpha blending, rotation, flipping, cropping, blurring, focus, text position, slide deck control, volume.

In one embodiment, a transition between two configurations of the display element may include fading out of the at least one object when the presenter moves and fading in the at least one object in an adjusted manner when the presenter stops. Moreover, the at least one object may be animated during the transition.

In one embodiment of the display system, the at least one sensing device may comprise at least one of a camera, a pressure sensor, a distance sensor, a motion sensor, and combinations thereof.

In one embodiment, the sensing signal may comprise at least one of a position, a distance, a gesture and/or a height of the presenter.

In one embodiment, the display system may comprise one sensing device as a camera and another sensing device as a pressure sensor, e.g., in the form of a mat positioned on the floor in front of the display device, wherein the mat may detect where a presenter stood on it. Based on the camera in combination with the pressure sensor, the position of the presenter may be detected and tracked in different dimensions.

In one embodiment of the display system, the at least one sensing device may be positioned in the display element, preferably in a frame of the display element.

In one embodiment of the display system, the display element may be a projection screen. In this embodiment, the display system may further comprise a projection device configured to project a display of the at least one object onto the display element, i.e., the projection screen.

In one embodiment of the display system, the at least one sensing device may be positioned in the projection device, the display element or as a separate unit. In this embodiment, the display controller may be communicatively connected to the projection device. In one embodiment, the display controller is integrated into a unit further comprising the projection device.

In one embodiment, the display system may further comprise a recording device configured to face the display element and to record the at least one object displayed on the display element. In this embodiment, the recording device may comprise the at least one sensing device. The recording device may be a camera, which is configured to record the presentation including the representation of the at least one object on the display element. The recording device may also record the location and movements of the presenter during the presentation and generate the sensing signal related to a location of the presenter. The recording device may be communicatively connected to the display controller physically or wirelessly and may be configured to transmit the sensing signal to the display controller.

In one embodiment of the display system, the at least one sensing device may include two cameras, wherein, if the two cameras are positioned in the display element, the two cameras are preferably positioned in different corners of the display element. For instance, the display element may have a rectangular shape including an upper left corner and an upper right corner, wherein one camera may be positioned in the upper left corner of the display element and the other camera may be positioned in the upper right corner. Each of the two cameras may generate a sensing signal and transmit the sensing signal to the display controller. The display controller may be configured to merge the sensing signals received from the camera and the other camera and determine more precise location information of the presenter based on the merged sensing signals. For instance, the display controller may be configured to determine the location of the presenter based on a triangulation of the sensing signals received from the two cameras.

In one embodiment of the display system, the at least one sensing device may be a pressure mat positioned in front of the display element. The pressure mat may be configured to determine whether the presenter is located closer to the display element than at least one predefined distance threshold, to sense a distance of the presenter to the display element and/or to sense the location of the presenter. The pressure mat may be a mat including a plurality of pressure sensors which generate a sensing signal upon load caused by the presenter. The plurality of pressure sensors may be arranged in a grid that extends over at least a part of the mat.

In one embodiment of the display system, the display element may be a large screen display device comprising multiple display tiles or panels, configured to jointly display the at least one object.

In a further aspect of the present invention there is provided a method for displaying at least one object. The method comprises: displaying at least one object on a display element; providing a sensing signal related to a location of a presenter in front of the display element; determining a portion of the display element that is visually covered by the presenter based on the sensing signal; and adjusting displaying of the at least one object based on the determined portion.

In one embodiment the sensing signal may be provided by at least one sensing device, e.g. a camera, distance sensor and/or pressure sensor and transmitted to a display controller.

In one embodiment of the method, adjusting displaying of the at least one object may include at least one of resizing, moving, enabling, disabling the at least one object.

In one embodiment, the method may further comprise detecting at least one of a position, a distance, a gesture and/or a height of the presenter and generating the sensing signal based on the detected position, distance, gesture and/or height of the presenter.

In one embodiment, gestures of the presenter may be used to change the composition of elements in the display content. For example, standing to the left and pointing arms out to the right of the display device may make the at least one object appear. Jumping may dramatically change the display composition of the elements in the display content. Taking a bow may blank the display element or bring up credits.

In one further aspect of the present invention, a non-transitory processor-readable medium is provided, storing at least one program, wherein the at least one program comprises instructions to execute the method as described above.

One advantage of the invention may be summarized as automatically adjusting positions of at least one object of the display content displayed on the displayed element so that a presenter moving in front of the display element does not block images, text or other media during the presentation.

### Short description of the drawings

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1A and Fig. 1B show an exemplary embodiment of a display system according to an aspect of the invention for two different locations of the presenter.
Fig. 2A-2D show different exemplary embodiments of a display system according to an aspect of the invention.
Fig. 3A and Fig. 3B show an exemplary example for an animated transition between two locations of the presenter in the display system according to an aspect of the invention.
Fig. 3C and Fig. 3D show a further exemplary example for an animated transition between two locations of the presenter in the display system according to an aspect of the invention.
Fig. 4 shows a flowchart for an exemplary display method according to another aspect of the invention.

### Detailed description of the drawings

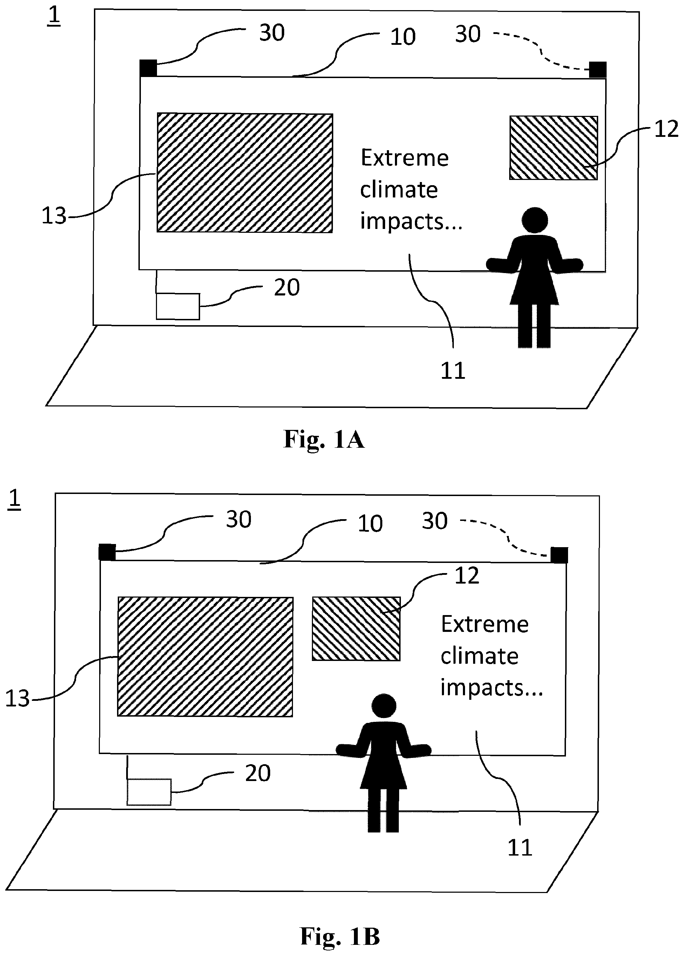

Fig. 1A and Fig. 1B show an exemplary embodiment of a display system 1 according to an aspect of the invention.

The display system 1 comprises a display element 10, a display controller 20 and at least one sensing device 30. In this example, the at least one sensing device 30 are two top mounted cameras, wherein the two cameras may be mounted at opposite edges/corners of a frame of the display element 10. In other example, the at least one sensing device 30 is a single camera configured for capturing an image including the location of the presenter and the display content. A sensing signal generated by the at least one sensing device 30 corresponds to the captured image of the sensing device 30.

The display element 10 may display a display content based on image data. The display controller 20 provides the image data to display element 10 for displaying the display content, wherein the display content includes at least one object 11, 12, 13. The presenter may preconfigure the display content so as to allow the at least one object 11, 12, 13 to separately move according to control of the display controller 20.

In the example of Fig. 1A and Fig. 1B, at least one object of the display content includes a text 11, a video 12 (right hatched element) and a photo 13 (left hatched element). There is a presenter in front of the display element 10, who may move during the course of the presentation. For instance, Fig. 1A shows the presenter located at a first position and Fig. 1B shows the presenter located at a second position. In the front view onto the display element 10, all objects of the display content are visible to an observer in the audience in the situation depicted in Fig. 1A. If the presenter moves to the location of Fig. 1B without any adjustment of the display content, the text 11 would not be fully readable by the observer in the audience, because the text 11 of Fig. 1A is blocked by the presenter at the location of Fig.1B.

To avoid such situation without adding further burden to the presenter, a co-presenter, or a director of the presentation, the display system 1 is equipped with at least one sensing device 30 which is configured to provide a sensing signal related to the location of the presenter and at least one position of the at least one object of the display content to the display controller 20. The sensing signal further includes a height of the presenter and a distance between the presenter and the display element 10. In other words, the at least one sensing device 30 is configured to detect and track the location of the presenter in front of the display element 10 and the at least one position of the at least one object of the display content. The display controller 20 includes at least one processor and at least one storage medium. The storage medium stores at least one program. The at least one processor executes the at least one program such that the display controller 20 may determine, based on the received sensing signal, which portion of the display element 10 is visually covered by the presence of the presenter. The display controller 20 may obtain the determined portion of the display element 10. This determination of the display controller 20 may be conducted automatically, continuously and in real-time, i.e., within a time frame that is not noticeable to human senses.

Based on the determined portion, the display controller 20 may be configured to adjust displaying the at least one object 11, 12, 13 on the display element 10, i.e., it may reconfigure the display content such that preferably none of the at least one object 11, 12, 13 is visually covered by the presence of the presenter in front of the display element 10. More specifically, the display controller 20 may obtain the determined portion of the display element 10, the display controller 20 may adjust the at least one position of the at least one object 11, 12, 13 displayed on the display element 10. The determined portion of the display element 10 corresponding to the location of presenter in front of the display element 10, i.e., being visually covered by the presenter, does not display any object 11, 12, 13 of display content.

In Fig. 1B, the text 11 of the display content has been switched with the video 12 as compared to Fig. 1A due to the new location of the presenter. As a result, the full text 11 remains readable to an observer in the audience.

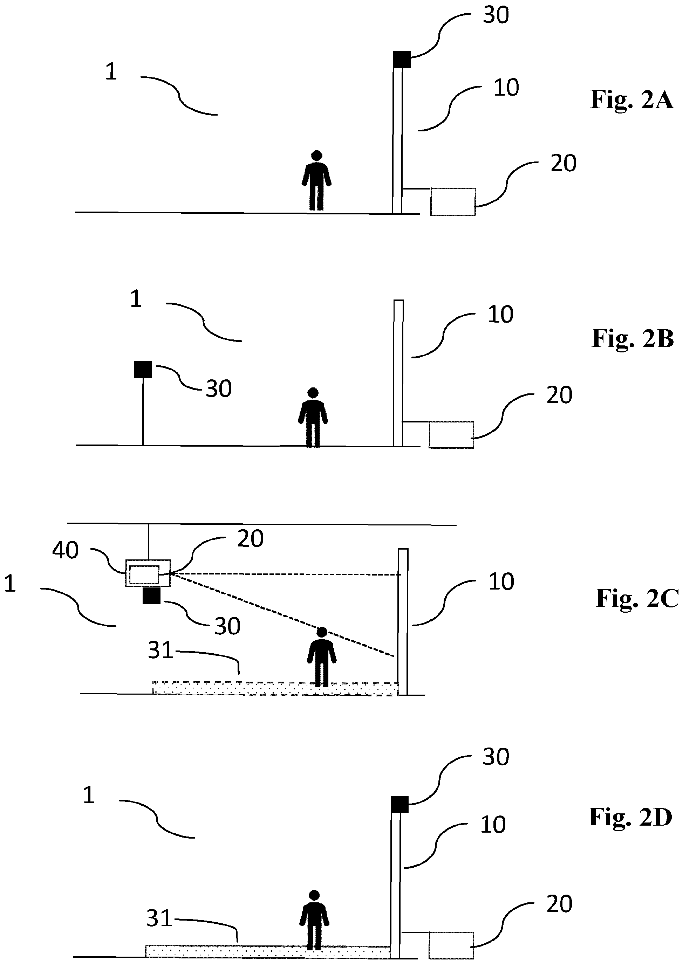

Fig. 2A shows a first exemplary embodiment of a display system according to an aspect of the invention.

In the embodiment of Fig. 2A the display element 10 is a display device. For example, the display device may be a LCD device, a micro led display device or mini led display device. The display device may be a large display device comprising multiple display panels. For example, a display panel may be a LC panel, micro led panel or mini led panel. The display system 1 comprises at least one sensing device 30, which may be a camera which is top mounted to the display device. The display device may be communicatively connected to a display controller 20 which is configured to control the display content.

In another embodiment, at least one sensing device 30 may be a distance sensor or motion sensor. The at least one sensing device 30 may emit a detection light (for example, infrared light) and receive a reflection light from the presenter.

Fig. 2B shows a first exemplary embodiment of a display system according to an aspect of the invention.

In the display system 1 of Fig. 2B, the at least one sensing device 30 may be positioned in front of the display element 10. Although not shown in Fig. 2B, the display system 1 may further comprise a top mounted camera to provide additional sensing signal.

Fig. 2C shows a first exemplary embodiment of a display system according to an aspect of the invention.

In the display system 1 of Fig. 2C, the display element 10 may be a projection screen. The display system 1 may further comprise a projection device (projector) 40, which may be configured to project the display content onto the projection screen. In Fig. 2C, the projection device 40 is depicted to be top mounted. The projection device 40 may also include the display controller 20, since the configuration of the display content is determined before its projection onto the projection screen. The at least one sensing device 30 may be mounted to the projection device 40. Although not shown in Fig. 2C, the display system 1 may further comprise a top mounted camera to provide additional sensing signal. In addition, or alternatively, the at least one sensing device 30 in the display system 1 of Fig. 2C may include a pressure sensor 31, which is depicted by a dashed boundary line. The pressure sensor 31 may be a pressure mat positioned in front of the display element 10 such that the location of the presenter may be detected based on his/her movement onto the pressure mat. The pressure sensor 31 communicatively connected to the display controller 20 for providing a sensing signal to the display controller 20.

Fig. 2D shows a first exemplary embodiment of a display system according to an aspect of the invention.

In the display system 1 of Fig. 2D, the display element 10 is a display device as in Fig. 2A. Additionally, the display system 1 of Fig. 2D comprises a pressure sensor 31 positioned in front of the display element 10. The pressure sensor 31 may be configured to determine whether the presenter is located closer to the display element 10 than at least one predefined distance threshold, to sense a distance of the presenter to the display element 10 and/or to sense the location of the presenter. The pressure sensor 31 may be a mat including a plurality of pressure sensors which generate a sensing signal upon load caused by the presenter. The plurality of pressure sensors may be arranged in a grid that extends over at least a part of the mat.

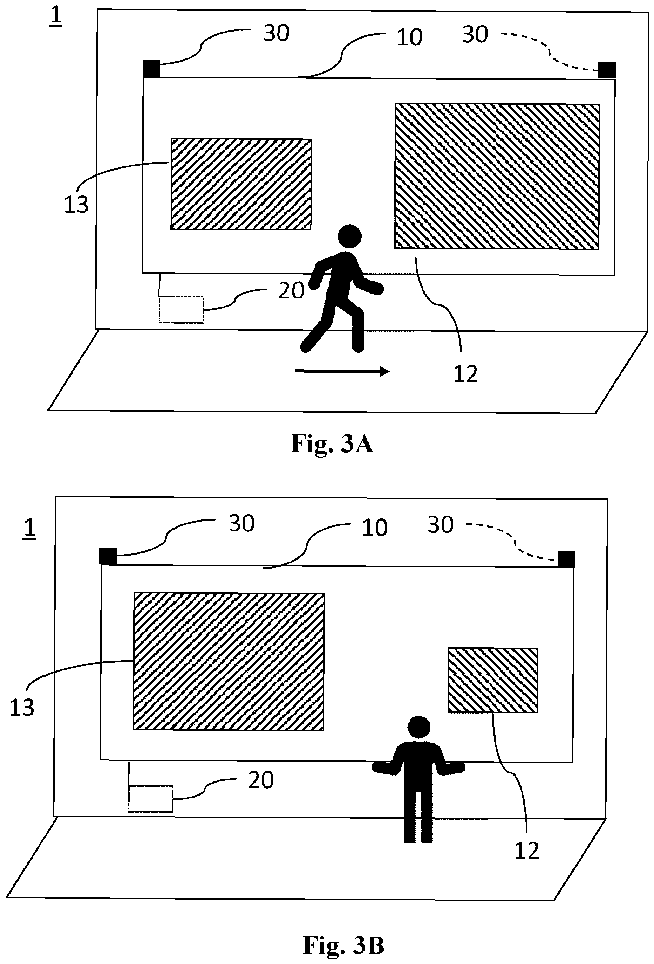

Fig. 3A and Fig. 3B show an example for an animated transition between two locations of the presenter in the display system 1 according to an aspect of the invention. The display system 1 may be equipped with two top mounted cameras as the sensing devices 30. The display system 1 equipped with one camera as the sensing device 30 is also workable.

As the presenter moves from left of FIG. 3A to right of FIG. 3B, the photo 13 may enlarge and the video 12 may shrink. If the presenter stopped in the middle of the display element 10, then the video 12 and the photo 13 could end up equal size. If the presenter keeps moving right, the video 12 could be removed from the display element 10.

Subtitles (for example, text 11) may move in accordance with the presenter's location so as not to be obscured.

Many other types of transition could be controlled by the position of the presenter based on preconfigured arrangements and standard rules, examples may include, but are not limited to, appearing, disappearing, fading, swapping position, scaling, audio/video pause and playback, alpha blending, rotation, flipping, cropping, blurring, focus, text position, slide deck control, volume.

As well as the position of the presenter, gestures may be used to change the composition of the display. For example, standing to the left and pointing arms out to the right of the display element 10 could make an object appear. Jumping may dramatically change the display composition. Taking a bow could blank the display element 10 or bring up credits.

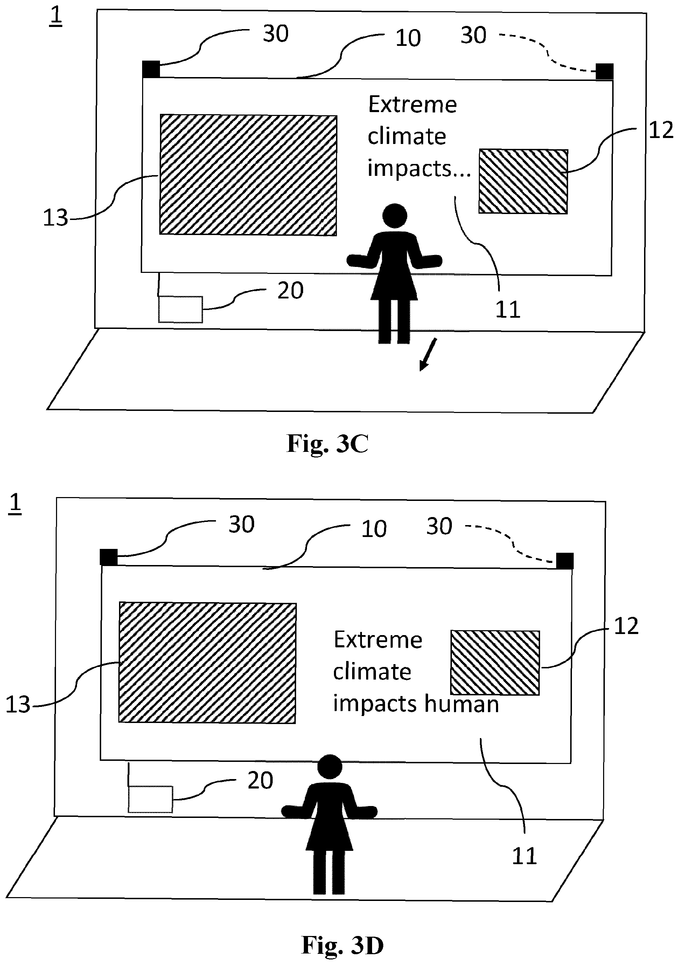

Fig. 3C and Fig. 3D show a further example for an animated transition between two locations of the presenter in the display system 1 according to an aspect of the invention. The display system 1 may be equipped with two top mounted cameras as the sensing devices 30. The display system 1 equipped with one camera as the sensing device 30 is also workable.

As the presenter moves from a position of FIG. 3C closer to the display element 10 to a position of FIG. 3D further away from the display element 10, the text 11 may be overlaid a part of the video 12 in accordance with the presenter's location. The presenter may want the observer to see the full content of the text 11.

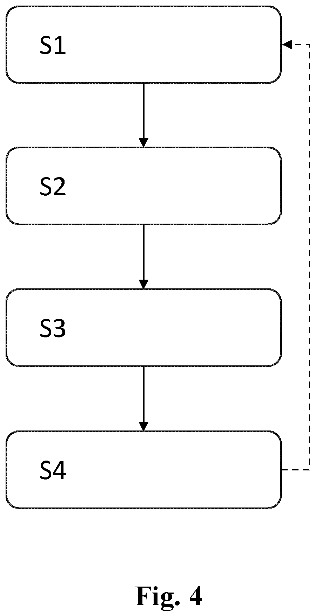

Fig. 4 shows a flowchart for an exemplary method according to another aspect of the invention.

A first step S1 may include displaying at least one object on a display element 10.

A further step S2 may include providing a sensing signal related to a location of a presenter when standing in front of the display element 10.

A further step S3 may include determining a portion of the display element 10 that is visually covered by the presenter based on the sensing signal.

A next step S4 may include adjusting displaying of the at least one object 11 based on the determined portion.

The method may be performed continuously during the presentation, i.e., step S1 to S4 may be repeated, preferably in this order.

The display system 1 can automatically adjust positions of the objects 11, 12, 13 of the display content displayed on the display element 10 so the presenter does not block images, photo, text, video or other media despite moving around freely in front of the display element 10.

The display controller 20 of display system 1 may be implemented in an electronic device. The electronic device may be a laptop computer, a desktop computer or a projector, etc.. The display controller 20 includes at least one processor and at least one storage medium. The processor is, for example, a central processing unit (CPU), or other programmable general purpose or special purpose micro control unit (MCU), microprocessor, digital signal processor (DSP), programmable controller, application specific integrated circuit (ASIC), graphics processing unit (GPU), image signal processor (ISP), image processing unit (IPU), arithmetic logic unit (ALU), complex programmable logic device (CPLD), field programmable gate array (FPGA) or other similar components or a combination of the above components. The processor may be electronically coupled to the storage medium.

The storage medium is, for example, any type of a fixed or mobile random-access memory (RAM), read-only memory (ROM), flash memory, hard disk or similar component or a combination of the above components. The storage medium may be a non-transitory processor-readable medium for storing at least one program, wherein the program comprises instructions to execute the method as described above.

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby to enable persons skilled in the art to understand the disclosure for various embodiments and with various modifications as are suited to the particular use or implementation contemplated. It is intended that the scope of the disclosure be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by persons skilled in the art without departing from the scope of the present disclosure as defined by the following claims. Moreover, no element and component in the present disclosure is intended to be dedicated to the public regardless of whether the element or component is explicitly recited in the following claims.
- 1: display system
- 10: display element
- 11, 12, 13: object
- 20: display controller
- 30: sensing device
- 31: pressure sensor
- 40: projection device

## Claims

1. Display system (1) for displaying at least one object (11, 12, 13) of a display content, the display system (1) comprising:
a display element (10) configured to display the at least one object (11, 12, 13);
at least one sensing device (30); and
a display controller (20),
wherein the at least one sensing device (30) is configured to provide a sensing signal related to a location of a presenter in front of the display element (10), and
wherein the display controller (20) is configured to determine a portion of the display element (10) that is visually covered by the presenter based on the sensing signal, and to adjust displaying of the at least one object (11, 12, 13) based on the determined portion.

2. Display system (1) according to claim 1, wherein the display controller (20) is configured to adjust displaying of the at least one object (11, 12, 13) such that the at least one object (11, 12, 13) is at least partially excluded from the determined portion.

3. Display system (1) according to claim 1 or 2, wherein adjusting to display of the at least one object (11, 12, 13) includes at least one of resizing, moving, enabling, disabling the at least one object (11, 12, 13).

4. Display system (1) according to any of the preceding claims, wherein the at least one sensing device (30) comprises at least one of a camera, a pressure sensor, a distance sensor, a motion sensor, and combinations thereof; and/or
wherein the sensing signal comprises at least one of a position, a distance, a gesture and/or a height of the presenter.

5. Display system (1) according to any of the preceding claims, wherein the at least one sensing device (30) is mounted on the display element (10), preferably on a frame of the display element (10).

6. Display system (1) according to any of the preceding claims, wherein the display element (10) is a projection screen, the display system (1) further comprising a projection device (40) configured to project the at least one object (11, 12, 13) of the display content onto the display element (10).

7. Display system (1) according to the claim 6, wherein the at least one sensing device (30) is positioned in the projection device (40).

8. Display system (1) according to any of the preceding claims, wherein the at least one sensing device (30) includes two cameras, wherein, if the two cameras are mounted on the display element (10), the two cameras are preferably mounted on different corners of the display element (10).

9. Display system (1) according to any of the claims 1-3, wherein the at least one sensing device (30) is a pressure mat positioned in front of the display element (10) and configured to determine whether the presenter is located closer to the display element (10) than at least one predefined distance threshold, to sense a distance of the presenter to the display element (10) and/or to sense the location of the presenter.

10. Display system (1) according to any of the preceding claims, wherein the display element (10) is a large screen display device comprising multiple display panels, configured to display the at least one object (11, 12, 13).

11. Method for displaying at least one object (11, 12, 13) of a display content, the method comprising:
Displaying at least one object (11, 12, 13) on a display element (10),
providing a sensing signal related to a location of a presenter in front of the display element (10),
determining a portion of the display element (10) that is visually covered by the presenter based on the sensing signal, and
adjusting displaying of the at least one object (11, 12, 13) based on the determined portion.

12. Method according to claim 11, wherein adjusting displaying of the at least one object (11, 12, 13) includes at least one of resizing, moving, enabling, disabling the at least one object.

13. Method according to any of the claims 11 or 12, further comprising detecting at least one of a position, a distance, a gesture and/or a height of the presenter, and
generating the sensing signal based on the detected position, distance, gesture and/or height of the presenter.

14. A non-transitory processor-readable medium, storing a program, wherein the program comprises instructions to execute the method of any of the claims 11 to 13.
